# EUROPEAN PATENT SPECIFICATION

(11) **EP 1 275 895 B1**
(45) Date of publication and mention of the grant of the patent: **08.08.2007**
(21) Application number: 02014593.4
(22) Date of filing: 02.07.2002
(51) Int. Cl.: F16N 25/02, F16N 7/32

(54) **Lubrication device for periodically feeding metered quantities of lubricant to a plurality of user devices**
Schmiereinrichtung für periodische Zufuhr von dosierten Scmierstoffmengen für mehrere Benutzergeräte
Dispositif de lubrification pour alimenter en quantités mesurées de lubrifiant plusieurs dispositifs

(30) Priority: 11.07.2001 IT MI20011478
(43) Date of publication of application: 15.01.2003
(73) Proprietor: DROPSA S.p.A., 20122 Milano (IT)
(72) Inventor: Divisi, Walter, Egham, Surrey TW20 OHJ (GB)
(74) Representative: Kratter, Carlo

(56) References cited:
- EP-A- 0 314 969
- EP-A- 0 386 326
- EP-A- 0 473 385
- EP-A- 0 498 242
- EP-A- 0 878 658
- EP-A- 1 052 445
- US-A- 5 285 871
- US-A- 5 542 498

## Description

The present invention relates to a lubrication device for periodically feeding metered quantities of lubricant to one or more user devices, in accordance with the pre-characterising part of the main claim.

Known devices of the aforesaid type are of relatively complicated assembly, and do not enable the micropump characteristics to be easily and quickly varied and/or the micropumps to be replaced in case of malfunction.

Known devices are also bulky, they present pressure and level sensors which are external and hence easily damaged, and generally the number of metering means for feeding the metered quantities of lubricant cannot be modified; in only some cases is this operation possible but it involves relatively lengthy and complicated procedures.

Further drawbacks of known devices relate to the connection of those electronic components provided within the metering means to each other and to a control unit, such connection generally involving relatively lengthy and complicated cabling operations which do not always ensure effective protection of the electrical connection cables.

An object of the present invention is to provide an easily and quickly assembled compact lubrication device which enables the micropumps to be quickly replaced, the number of metering means to be varied, and the metering means to be electrically connected quickly and safely to each other and to the control unit.

This and further objects which will be apparent to an expert of the art are attained by a device in accordance with the characterising part of the main claim.

The present invention will be more apparent from the accompanying drawings, which are provided by way of non-limiting example and in which:

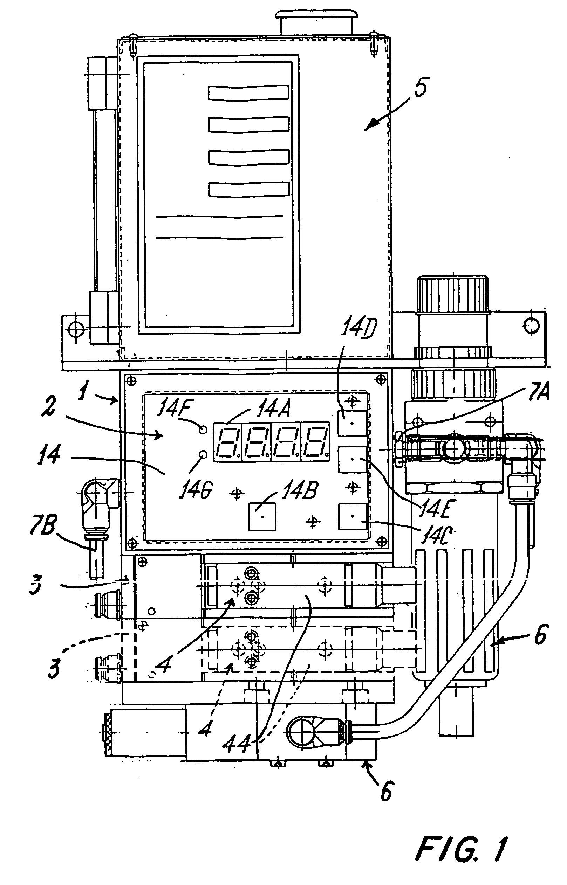

Figures 1 and 2 are a schematic front and sectional view of a device according to the invention;

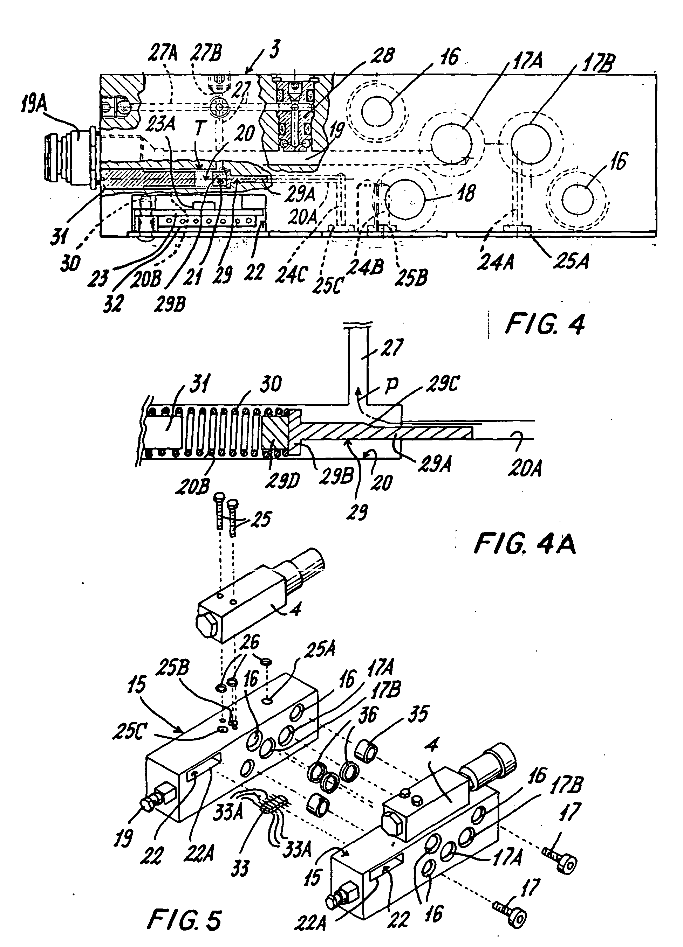

Figures 3, 4 and 5 are a front view, a partly sectional view from above, and an exploded perspective view of a part thereof;
Figure 4A is an enlarged schematic view of that part thereof indicated by the arrow T in Figure 4.

With reference to said figures, a device according to the invention comprises a main body 1 housing a central control and operating unit 2 for the device, a plurality of modular units 3 housing the metering and mixing means 4, a lubricant reservoir 5 and compressed air feed means 6. The main body 1 presents two compressed air inlets 7A, 7B, two internal seats 15 for an air pressure measurement member 9 and, respectively, for a member 10 for measuring the lubricant level in the reservoir, an inlet port 11 for the lubricant, and conduits 12 (partially represented) for feeding the compressed air and lubricant to the modular units 3. The body 1 also presents an internal seat 13 for housing an electronic component card and an interface 14.

The members 9 and 10 for measuring the air pressure and the lubricant level are usual electronic sensors continuously feeding the device control unit with a signal relative to the value of the quantity measured.

The pressure and/or level value can be displayed on a display member 14A of the interface 14.

It should be noted that by locating the members for measuring the mixing air pressure and lubricant level within the device interior, the device is made more compact and safe.

The seat 13 for the electronic card in the main body 1 comprises a window 13A open at the lower base of the main body 1, to house usual electrical connection member, for example a plurality of female contactors, enabling the main body 1 to be quickly and reliably connected to the first modular unit 3.

In addition to the display member 14A, the interface 14 comprises a plurality of selection members 14B-C-D-E-F-G, by acting on which the different functional modes of the device can be selected (as illustrated hereinafter). The reservoir 5 is of conventional type and will not be described in detail.

The modular units 3 each present a base block 15 to which a conventional micropump 44 is removably fixed. The base block 15 presents first through holes 16 for passage of the members 17 which connect the modular units 3 together, second through holes 17A, B for the compressed air, a third hole 18 for passage of the pressurized oil, a chamber 19 in which the lubricant and compressed air are mixed together and comprising an exit port for the mixture, a chamber 20 for housing a mobile element 21 for sensing the delivery of the metered quantity of lubricant, a seat 22 for housing an electronic card 23, and conduits 24A for feeding compressed air to the micropump, 24B for feeding the lubricant to the micropump, and 24C for delivering the metered quantity of lubricant.

The micropumps 4 can be of fixed capacity or variable capacity type and are secured to the base block 15 by screws 25, and using gaskets 26 to connect to the respective compressed air feed, lubricant feed and metered lubricant delivery ports 25A, B, C.

The mixing chamber 19 is connected to the micropump delivery port 25C via the chamber 20 of the delivery sensor and a conduit 27 presenting a non-return valve 28 opening into the mixing chamber 19.

The delivery sensor chamber 20 comprises two parts 20A, 20B of different diameters to house the stem 29A of a slider 29 and, respectively, the slider head 29B and a spring 30 acting on said head and on an adjustment screw 31. Preferably, the stem 29A presents a recessed portion 29C for facilitating lubricant passage (arrow P), the regular advancement of the slider for low throughputs, and the entry of the stem into the portion 20A of the chamber 20 during the return stroke of the slider 29. The head 29B is made of a magnetic or magnetized material. The movement of the slider 29 is sensed by a Hall sensor 23A which senses the magnetic field variations induced by the movement of the magnetic head 29D. This sensor together with the relative electronic card 23 is housed in the base block 15 within the seat 22. The electronic card 23 presents at both the windows 22A of the seat 22 a usual electrical connection member 32, for example a plurality of female contactors enabling the base blocks 15 to be quickly and reliably connected electrically together and/or to the main body 1.

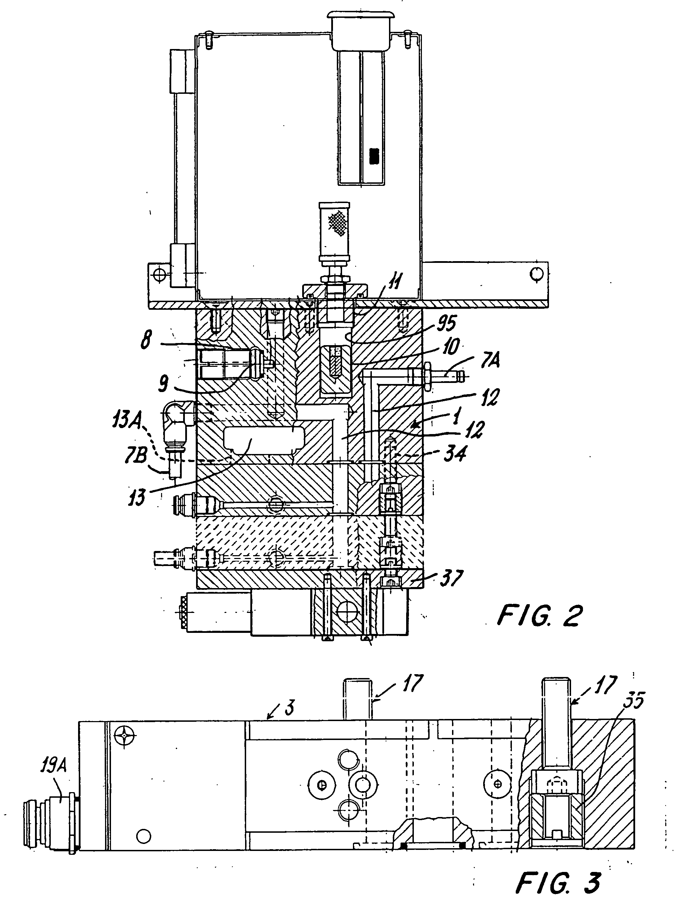

For this purpose, a bridge connection element 33 is advantageously used, the pins 33A of which penetrate into the sockets of the connection member 32. To connect the base blocks 15 together, gaskets 36 are used together with screws 17 which engage threaded holes 34 in the main body 1 or engage in internally and externally threaded collars 35 screwed into the holes 16 in the base blocks themselves. The last base block is closed by a plate 37 (Figure 2) connected thereto by screws and gaskets. The compressed air feed means are not described in detail as they are of conventional type. It should be noted that said means could also be provided in a different position and, in particular, not be associated with the device of the invention. By virtue of the control unit 2, the device of the invention is able to perform a first and second initialization function, a configuration function, a "normal" function and an alarm function. The first initialization function is activated by simultaneously pressing the Mode key 14C and the Down key 14E for at least 10 seconds. In this manner a series of lubrication cycles takes place with 1 second of lubrication and 1 second of pause, these being necessary to eliminate any residual air from the system, for a total time of 10 minutes. At the end of this series the control unit 2 effects a lubrication cycle and checks the lubrication. If there are no alarms it enters into the normal function stage. The second initialization function is activated by pressing the Mode key 14C together with the Up key 14D for at least 10 seconds. The device executes for 10 minutes a series of fast lubrication cycles for the purpose of eliminating air from the system (0.5 seconds of lubrication and 0.5 seconds of pause). The configuration function is activated by pressing the Mode key 14C for 10 seconds to access the configuration menu. When in the configuration mode all the basic functions for correct operation of the device are set. The following can be set:
- the maximum time within which confirmation must be received that lubrication delivery has taken place (adjustment range 1-99 seconds),
- the pause time for recharging the pump (adjustment time 0.1-9.9 seconds),
- the time between one lubrication cycle and the next (counting commences when confirmation lubricant delivery has taken place arrives; adjustment range 0-99 seconds),
- the number of modular units with delivery sensors,
- the maximum and minimum air pressure limits,
- the alarm function for the oil level,
- the number of initialization cycles.

The "normal" operation function is activated the moment the device is switched on. During normal operation the display 14A displays the timer and the air pressure alternately. Simultaneously the LEDs 14F, 14G to the side of the display are lit. By pressing the Up key 14D the display on the timer is halted until the key is released. By pressing the Down key 14E the air pressure display is halted until the key is released.

The alarm function is activated automatically, to display an error code on the display 14A. Specifically, the device is arranged to indicate:
- a measurement error by the delivery sensor;
- pressure too high or too low;
- low oil level;
- error in the initiation cycle.

According to the invention, the control unit 2 is able to automatically calculate the moment of reset of the delivery sensor without using signals originating from the outside. With the invention, a single air flow is used alternately for operating the micropumps 4 and as the air for mixing with the lubricant. As the air pressure is continuously measured by the sensor 9, the moment of reset can be identified by analyzing this value. In this respect, while the pressure remains at a level P1 at which Pm < P1 < PM, it can be concluded that regular mixing of air with lubricant is taking place at an acceptable pressure between maximum pressure (PM) and minimum pressure (Pm). When the pressure (at the moment t1) falls to zero and remains there for a predetermined time Ät (Ät = t₂ - t₁) to then rise (at the moment t2) to the previous value (P1), the control unit identifies the time interval Ät as the moment of operation of the micropumps and the moment t₁ as the moment of reset of the delivery sensors. In this manner, by analyzing only the variation in the pressure, the moment of reset can be determined without the aid of external signals relative to the moment of operation of the pumps.

Finally it should be noted that the aforedescribed embodiment has been provided by way of example only, and that numerous variants are possible, all falling within the same inventive concept, and that some of the technical characteristics illustrated could also be implemented in devices of traditional type, i.e. not comprising a main body and modular units associable with each other and with the main body. This is particularly valid for the specific sensor for sensing the delivery of the micropump, for the shape of the slider 29 of this sensor, for the method of sensing the moment of reset of this sensor, for the method of inserting the pressure sensor 9 and level sensor 10 into the body of the device, for the arrangement and separation of the pump delivery sensor and of the pump sensor, and for the facility to modify the mixing air working parameters electronically rather than by mechanical adjustment.

## Claims

1. A lubrication device for periodically feeding metered quantities of lubricant to one or more user devices, of the type comprising: a central control and operating unit (2), and a plurality of metering and mixing means (4) presenting a micropump (44) connected to a chamber (19) for mixing together lubricant fed by the micropump and compressed air, at least one of the micropumps comprising, connected to said central unit (2), a member (29, 23A) for monitoring the delivery of said at least one micropump (44), said device comprising members (9, 10) for measuring the pressure of the air circulating through the device and the lubricant level in a reservoir (5) connected to the device; **characterised in that** said central unit (2) is housed in a main body (1) removably connected to at least one modular unit (3), said modular units (3) being arranged to each house a separate metering means (4) and being modularly connectable in series with each other, a micropump (44) being associated with each of said modular units, said modular units (3) and main body (1) comprising members (32, 33) for electrically connecting said modular units in series with each other and for electrically connecting the first of said series-connected modular units to the main body (1).

2. A device as claimed in claim 1, **characterised in that** the modular units (3) are all identical.

3. A device as claimed in claim 1, **characterised in that** the modular units (3) each comprise a base block (15) with which a micropump (44) is removably associated externally, said base block internally presenting the mixing chamber (19) and a plurality of through holes (18, 17A, 17B, 24, 24B, 24C, 27) for circulation of the lubricant, of the metered quantities of lubricant dispensed by the pump, and of the compressed air.

4. A device as claimed in claim 1, **characterised in that** the modular units (3) each comprise a base block (15) presenting in its interior a seat for the member (29, 23A) for monitoring the delivery of the micropump (44).

5. A device as claimed in claim 1 or 4, **characterised in that** the monitoring member (29, 23A) comprises a slider (29) movable within the interior of a guide chamber (20) in a first direction by the action of the pressurized lubricant dispensed by the micropump (44) and in the opposite direction to the first by the action of an elastic member (30), said slider having at least one (20D) of its parts constructed of a magnetic or magnetized material, a sensor (23A) being provided to sense the magnetic field variations generated by the movement of said slider and to feed a relative signal to the control unit (2).

6. A device as claimed in claim 5, **characterised in that** the guide chamber (20) within which the slider (29) moves is provided in the interior of base block (15).

7. A device as claimed in claim 5, **characterised in that** the slider (29) comprises a stem (29A) movable in a straight line within a portion (20A) of the guide chamber (20), said stem having a recessed portion (29C) which facilitates lubricant passage and the entry of the stem during the return stroke of the slider.

8. A device as claimed in claim 1, **characterised in that** the air pressure measurement member is housed inside the main body (1).

9. A device as claimed in claim 1, **characterised in that** the air pressure measurement member is arranged to continuously measure the value of said pressure.

10. A device as claimed in claim 9, **characterised in that** the main body (1) comprises an interface (14A) for displaying the actual measured pressure value.

11. A device as claimed in claim 9, **characterised in that** the central unit (2) calculates the moment of reset for the delivery monitoring member (29, 23A) on the basis of the pressure variations measured by the pressure measurement member (9) by verifying the change in pressure from a first value lying between a maximum and minimum predetermined value, to a second value equal to a predetermined lower limiting value, the maintaining of said second value for a predetermined time and the subsequent attainment of a third value between said maximum and minimum values.

12. A device as claimed in claim 1, **characterised in that** the lubricant level measurement member (10) is housed inside the main body (1).

13. A device as claimed in claim 1, **characterised in that** the main body (1) and the modular units (3) each comprise an internal seat for housing respective electronic components.

14. A device as claimed in claim 1, **characterised in that** the main body (1) comprises an interface (14A, B, C, D, E) enabling the working parameters for the compressed air circulating through the device to be modified by means of electronic components.

## Patentansprüche

1. Schmiervorrichtung für die periodische Zufuhr dosierter Schmierstoffmengen zu einem oder zu mehreren Benutzergeräten, wobei die Vorrichtung eine zentrale Steuerungs- und Bedienungseinheit (2) und eine Vielzahl von Dosier- und Mischorganen (4) aufweist, welche eine Mikropumpe (44) bilden, die mit einer Kammer (19) verbunden ist, um den von der Mikropumpe zugeführten Schmierstoff mit Druckluft zu mischen, wobei zumindest eine der Mikropumpen ein an die Zentraleinheit (2) angeschlossenes Element (29, 23A) zur Überwachung der Förderung der zumindest einen Mikropumpe (44) aufweist, wobei die Vorrichtung Elemente (9,10) aufweist, um den Druck der Luft, welche durch die Vorrichtung zirkuliert, und den Schmierstoffpegel in einem an die Vorrichtung angeschlossenen Reservoir (5) zu messen, **dadurch gekennzeichnet, dass** die Zentraleinheit (2) in einem Hauptkörper (1) untergebracht ist, der an zumindest eine Moduleinheit (3) lösbar angeschlossen ist, wobei die Moduleinheiten (3) je ein einzelnes Dosierorgan (4) enthalten und modular in Serie miteinander verbindbar sind, wobei jeder der Moduleinheiten eine Mikropumpe (44) zugeordnet ist und die Moduleinheiten (3) und der Hauptkörper (1) Elemente (32, 33) aufweisen, um die Moduleinheiten untereinander in Serie elektrisch zu verbinden, und um die erste der in Serie miteinander verbundenen Moduleinheiten an den Hauptkörper (1) anzuschließen.

2. Vorrichtung nach Anspruch 1, **dadurch gekennzeichnet, dass** alle Moduleinheiten (3) identisch sind.

3. Vorrichtung nach Anspruch 1, **dadurch gekennzeichnet, dass** die Moduleinheiten (3) je einen Basisblock (15) aufweisen, mit dem extern eine Mikropumpe (44) lösbar verbunden ist, wobei im Inneren des Basisblocks für die Zirkulation des Schmierstoffs, der dosierten Mengen des von der Pumpe abgegebenen Schmierstoffs und der Druckluft, die Mischkammer (19) und eine Vielzahl von Durchgangslöchern (18, 17A, 17B, 24, 24B, 24C, 27) vorgesehen sind.

4. Vorrichtung nach Anspruch 1, **dadurch gekennzeichnet, dass** die Moduleinheiten (3) je einen Basisblock (15) aufweisen, der in seinem Inneren einen Sitz für die Elemente (29, 23A) zur Überwachung der Förderung der Mikropumpe (44) aufweist.

5. Vorrichtung nach Anspruch 1 oder 4, **dadurch gekennzeichnet, dass** das Überwachungselement (29, 23A) einen Schieber (29) aufweist, der im Inneren einer Führungskammer (20) durch die Wirkung des unter Druck stehenden Schmierstoffs, der von der Mikropumpe (44) abgegeben wird, in einer ersten Richtung bewegbar ist, und durch die Wirkung eines elastischen Elements (30) in der zur ersten Richtung entgegengesetzten Richtung bewegbar ist, wobei zumindest einer (20D) der Teile des Schiebers aus einem magnetischen oder magnetisierten Material hergestellt ist, und wobei ein Sensor (23A) vorgesehen ist, um die Veränderungen des Magnetfelds abzufühlen, welche durch die Bewegung des Schiebers erzeugt werden, und um der Steuerungseinheit (2) ein entsprechendes Signal zuzuführen.

6. Vorrichtung nach Anspruch 5, **dadurch gekennzeichnet, dass** die Führungskammer (20), in welcher der Schieber (29) sich bewegt, im Inneren des Basisblocks (15) vorgesehen ist.

7. Vorrichtung nach Anspruch 5, **dadurch gekennzeichnet, dass** der Schieber (29) einen Schaft (29A) aufweist, der innerhalb eines Abschnittes (20A) der Führungskammer (20) geradlinig bewegbar ist, wobei der Schaft einen vertieften Teil (29C) aufweist, welcher den Durchlass des Schmierstoffs und das Eintreten des Schaftes während des Rückhubes des Schiebers erleichtert.

8. Vorrichtung nach Anspruch 1, **dadurch gekennzeichnet, dass** das Luftdruck-Messelement innerhalb des Hauptkörpers (1) untergebracht ist.

9. Vorrichtung nach Anspruch 1, **dadurch gekennzeichnet, dass** das Luftdruck-Messelement ausgebildet ist, um den Wert dieses Drucks kontinuierlich zu messen.

10. Vorrichtung nach Anspruch 9, **dadurch gekennzeichnet, dass** der Hauptkörper (1) eine Schnittstelle (14A) aufweist, um den Momentanwert des Drucks anzuzeigen.

11. Vorrichtung nach Anspruch 9, **dadurch gekennzeichnet, dass** die Zentraleinheit (2) den Zeitpunkt des Rückstellens des Förderungsüberwachungs-Elements (29, 23A) auf Basis der von dem Druckmesselement (9) gemessenen Druckveränderungen berechnet, indem die Druckänderung von einem ersten Wert, der zwischen vorbestimmten Maximal- und Minimalwert liegt, zu einem zweiten Wert, der gleich einem vorbestimmten unteren Grenzwert ist, das Aufrechterhalten des zweiten Werts für eine vorbestimmte Zeitdauer, und das darauffolgende Erreichen eines dritten Werts zwischen den Maximal- und Minimalwerten überprüft wird.

12. Vorrichtung nach Anspruch 1, **dadurch gekennzeichnet, dass** das Schmierstoffpegel-Messelement (10) im Inneren des Hauptkörpers (1) untergebracht ist.

13. Vorrichtung nach Anspruch 1, **dadurch gekennzeichnet, dass** der Hauptkörper (1) und die Moduleinheiten (3) je einen inneren Sitz zum Unterbringen der zugehörigen elektronischen Bauteile aufweisen.

14. Vorrichtung nach Anspruch 1, **dadurch gekennzeichnet, dass** der Hauptkörper (1) eine Schnittstelle (14A, B, C, D, E) aufweist, welche das Verändern der Arbeitsparameter für die Druckluft, die durch die Vorrichtung zirkuliert, mittels elektronischer Bauteile ermöglicht.

## Revendications

1. Dispositif de lubrification pour alimenter de manière périodique des quantités dosées de lubrifiant vers un ou plusieurs dispositifs utilisateurs, du type comportant : une unité centrale de commande et d'actionnement (2), et une pluralité de moyens de dosage et de mélange (4) présentant une micropompe (44) reliée à une chambre (19) pour mélanger ensemble du lubrifiant alimenté par la micropompe et de l'air comprimé, au moins une des micropompes comportant, relié à ladite unité centrale (2), un élément (29, 23A) pour surveiller la délivrance de ladite au moins une micropompe (44), ledit dispositif comportant des éléments (9, 10) pour mesurer la pression de l'air circulant à travers le dispositif et le niveau de lubrifiant dans un réservoir (5) relié au dispositif, **caractérisé en ce que** ladite unité centrale (2) est reçue dans un corps principal (1) relié de manière amovible à au moins une unité modulaire (3), lesdites unités modulaires (3) étant agencées pour recevoir chacune des, moyens de dosage séparés (4), et pouvant être reliées de manière modulaire en série les unes aux autres, une micropompe (44) étant associée à chacune desdites unités modulaires, lesdites unités modulaires (3) et ledit corps principal (1) comportant des éléments (32, 33) pour connecter électriquement lesdites unités modulaires en série les unes avec les autres, et pour connecter électriquement la première desdites unités modulaires connectées en série au corps principal (1).

2. Dispositif selon la revendication 1, **caractérisé en ce que** les unités modulaires (3) sont toutes identiques.

3. Dispositif selon la revendication 1, **caractérisé en ce que** les unités modulaires (3) comportent chacune un bloc de base (15) avec lequel une micropompe (44) est associée de manière amovible extérieurement, ledit bloc de base présentant intérieurement la chambre de mélange (19) et une pluralité de trous traversants (18, 17A, 17B, 24, 24B, 24C, 27) pour circulation du lubrifiant, des quantités dosées de lubrifiant distribuées par la pompe, et de l'air comprimé.

4. Dispositif selon la revendication 1, **caractérisé en ce que** les unités modulaires (3) comportent chacune un bloc de base (15) présentant dans son intérieur un siège pour l'élément (29, 23A) pour surveiller la délivrance de la micropompe (44).

5. Dispositif selon la revendication 1 ou 4, **caractérisé en ce que** l'élément de surveillance (29, 23A) comporte un coulisseau (29) mobile dans l'intérieur d'une chambre de guidage (20) dans une première direction parallèle à l'action du lubrifiant mis sous pression distribué par la micropompe (44), et dans la direction opposée à la première par l'action d'un élément élastique (30), ledit coulisseau ayant au moins une (20D) de ses parties constituée d'un matériau magnétique ou aimanté, un capteur (23A) étant fourni pour détecter les variations de champ magnétique générées par le déplacement dudit coulisseau, et pour alimenter un signal relatif vers l'unité de commande (2).

6. Dispositif selon la revendication 5, **caractérisé en ce que** la chambre de guidage (20) dans laquelle le coulisseau (29) se déplace est agencée dans l'intérieur du bloc de base (15).

7. Dispositif selon la revendication 5, **caractérisé en ce que** le coulisseau (29) comporte une tige (29A) mobile en ligne droite dans une partie (20A) de la chambre de guidage (20), ladite tige ayant une partie évidée (29C) qui facilite un passage de lubrifiant et l'entrée de la tige pendant la course de retour du coulisseau.

8. Dispositif selon la revendication 1, **caractérisé en ce que** l'élément de mesure de pression d'air est reçu à l'intérieur du corps principal (1).

9. Dispositif selon la revendication 1, **caractérisé en ce que** l'élément de mesure de pression d'air est agencé pour mesurer en continu la valeur de ladite pression.

10. Dispositif selon la revendication 9, **caractérisé en ce que** le corps principal (1) comporte une interface (14A) pour afficher la valeur de pression réelle mesurée.

11. Dispositif selon la revendication 9, **caractérisé en ce que** l'unité centrale (2) calcule le moment de réinitialisation pour l'élément de surveillance de délivrance (29, 23A) sur la base des variations de pression mesurées par l'élément de mesure de pression (9) en vérifiant le changement de pression à partir d'une première valeur s'étendant entre des valeurs prédéterminées maximum et minimum, jusqu'à une deuxième valeur égale à une valeur de limite inférieure prédéterminée, le maintien de ladite deuxième valeur pendant un temps prédéterminé et l'obtention consécutive d'une troisième valeur entre lesdites valeurs maximum et minimum.

12. Dispositif selon la revendication 1, **caractérisé en ce que** l'élément de mesure de niveau de lubrifiant (10) est reçu à l'intérieur du corps principal (1).

13. Dispositif selon la revendication 1, **caractérisé en ce que** le corps principal (1) et les unités modulaires (3) comportent chacune un siège interne pour recevoir des composants électroniques respectifs.

14. Dispositif selon la revendication 1, **caractérisé en ce que** le corps principal (1) comporte une interface (14A, B, C, D, E) permettant aux paramètres de travail pour l'air comprimé circulant à travers le dispositif d'être modifiés par l'intermédiaire de composants électroniques.
